# EUROPEAN PATENT APPLICATION

(11) **EP 2 537 439 A1**
(43) Date of publication of application: **26.12.2012**
(21) Application number: 11171016.6
(22) Date of filing: 22.06.2011
(51) Int. Cl.: A47B 57/26, F16B 12/42, F16B 17/00

(54) **Fastener**

(71) Applicant: The Royal College of Art, London SW7 2EU (GB); Parton, Benjamin, London SW7 2EU (GB)
(72) Inventor: Parton, Benjamin, London, SW7 2EU (GB)
(74) Representative: Hedley, Nicholas James Matthew

(57) **Abstract**

The present invention provides a fastener for securing an element of a first cross-section (e.g. square) in a hole of a second, different cross-section, e.g. circular. The fastener has at least two separable parts (12,14) that each defines part of the opening an opening (16) of the shape of the element so that it can accommodate the element. The fastener has an outside perimeter of the shape of the second cross-section and that is able to fit into the hole. The fastener can be used to fix square legs to support an item of furniture in which a circular hole has been drilled.

## Description

### Technical Field

The present invention relates to a fastener for securing an element of one cross-sectional shape in a hole of a different cross-sectional shape. The invention finds application in, for example, securing uprights in pieces of furniture, for example cupboards, shelves, tables, chairs etc.

### Background Art

It is easier and cheaper to shape wood in rectangular cross-section than in circular cross-section, i.e. doweling. This is because cutting and planing operations are generally planar in nature and therefore it is relatively straightforward to make rectangular cross-sectioned wooden elements. On the other hand, circular cross-sectioned wood requires a much more complex shaping operation, making doweling much more expensive.

On the other hand, it is much easier and cheaper to form a round hole in an object, e.g. by a drilling operation, than to form a rectangular-sectioned hole, which requires multiple cutting operations.

It would be desirable to gain the cost advantage of the use of rectangular-sectioned elements and secure them in circular-sectioned holes.

Rakks/Rangine Corporation of 330 Reservoir Street, Needham, Massachusetts 02494, United States of America disclose a range of shelving that can be supported on poles. The poles can pass through a countertop and grommets may be provided to allow the poles to pass through the countertops. The grommets have a circular outline and include a square or rectangular hole passing through the grommets through which the poles can pass. The grommets are held within a round hole in the countertop by means of epoxy resin. The grommets do not secure the poles within the grommets but rather the poles are slidable within the grommets.

### Disclosure of the Invention

The present invention is defined by reference to the accompanying claims.

Broadly stated, the present invention provides a fastener for securing an element of a first cross-section (preferably of a rectangular or a square cross-section) in a hole of a different cross-section (generally of circular cross-section). The fastener has an internal opening having a shape corresponding to the cross-section of the element and an outside perimeter having a shape that corresponds to the shape of the hole.

The dimensions of the opening in the fastener are matched to the dimensions of the element so that the element is held tight by the fastener when inserted into the hole. The fastener includes at least two parts that fit around the element and in this way it is possible to achieve the tight fit of the fastener around the element while at the same time making the fastener easy to fit around the element. It also allows the fastener to be secured at any place along the length of the element. If the fastener were a one-part construction, it would be difficult to achieve such a tight fit between the fastening and the element while allowing a user to place the fastener at a desired location part of the way along an elongate element, which would be desirable, for example to reposition a shelf.

The outside diameter of the fastener should match the diameter of the hole so that the insertion of the fastener into the hole keeps to the at least two parts of the fastener together and hold the element tightly within the fastener and therefore secures the element at a given position within the hole.

Each of the parts of the fastener preferably has an outside surface that forms part of the periphery of the fastener and an inside surface that forms part of the opening in the fastener.

It is less critical to match exactly the dimensions of the opening in the fastener to the cross-section of the element if the internal wall of the opening is provided with projections that project into the element and hold the fastening and the element in a fixed position relative to each other. Such projections may take the form of teeth that bite into the surface of the element, which is particularly useful when the element is made of a compliant material such as wood. Alternatively the projections could fit into corresponding recesses provided along the length of the element at the place where it is desired to fix the fastening. Of course, the projection could, in the latter case, be provided on the element and the corresponding recess could be provided on the fastening. Either way, the fastener should fit snugly into the hole so as to maintain the relative positions between the fastener and the element.

As mentioned above, the fastener is made in two or more parts. Adjacent parts of the fastener preferably form a joint together when secured around the element. Such a joint prevents the two parts of the fastener from becoming separated from each other, especially during the insertion of the fastener and element into the hole. The joint between the adjacent parts of the fastener preferably prevents axial movement between the parts, when connected together. The term "axial movement" means movement of the two parts relative to each other in a direction parallel to the axis of the opening in the fastening. The parts may be connected together by a simple male/female joint that engage with each other when the parts are fastened around an element.

The fastener preferably includes an abutment limiting the amount by which the fastener can be inserted into the hole. This abutment could be in the form of a flange around the top or bottom of the fastener that has a diameter greater than that of the rest of the fastener and so cannot fit into the hole and engages the area around the hole as the fastener is inserted into the hole.

According to one embodiment, the fastener includes two parts that are identically shaped so that it is not necessary to choose between differently-shaped parts when assembling a fastener.

The element is preferably an elongated element, although it need not be and can be of any desired shape.

The present invention is ideal for resisting forces that tends to cause relative movement between the element and the part in which the hole is formed , such forces causing the element to be moved further into the hole or to move through the hole in the same direction as the element was inserted. In one embodiment, the element may form the leg of a piece of furniture, which can then support the piece of furniture and items within or on it. For example, the present invention can be used to secure poles in displays or shelving units and for securing the shelves themselves on the poles. They can also be used for securing legs in tables, chairs or stools, r in kitchen or other storage units. However, the present invention is not limited to the field of furniture and it has many applications in a variety of different fields for securing any element of one cross-section in a hole of a different cross-section.

Although the present invention has been described above in terms of a rectangular element and a round hole, the invention is not limited to such a configuration and, for example, hexagonal elements can be secured in the same manner; furthermore, the hole may be of a non-circular shape, such as oval or even square.

The present invention also extends to an article in which an element is secured using a fastener as generally described above. Furthermore, the present invention relates to a method of securing an element in a hole using a fastener, as generally described above.

### Description of the Drawings

There will now be described, by way of example only, an embodiment of the present invention in which:
Figure 1 is a bottom view of a fastener in accordance with the present invention;
Figure 2 is an isometric view of one part of the fastener of Figure 1 taken from the top left;
Figure 3 is an isometric view of the rear of the part of Figure 2 taken from the top left; and
Figures 4 and 5 show the steps of securing an element in a hole using the fastener of Figures 1 to 3, which is ; the fastener is shown in ghost form so that the internal elements of the fastener are visible, as well as the external features.

### Detailed Description of a Preferred Embodiment

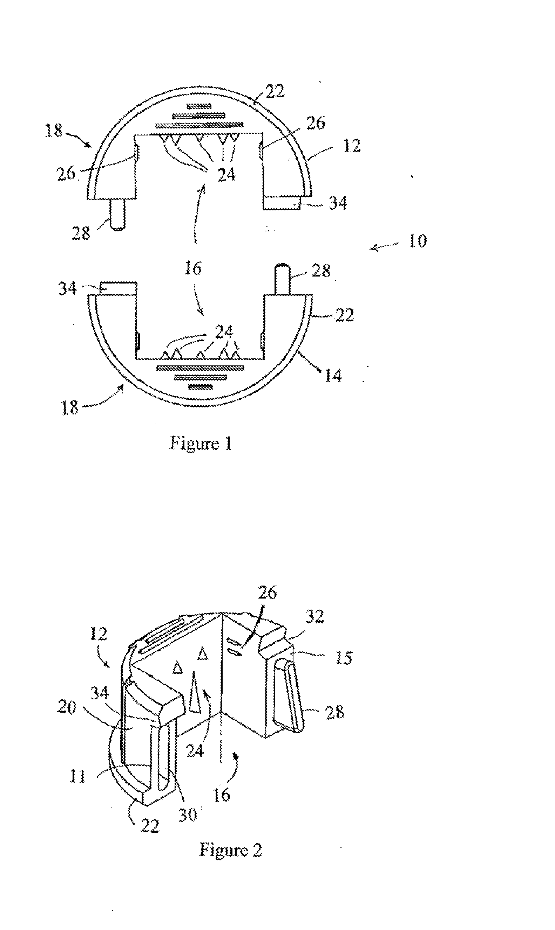

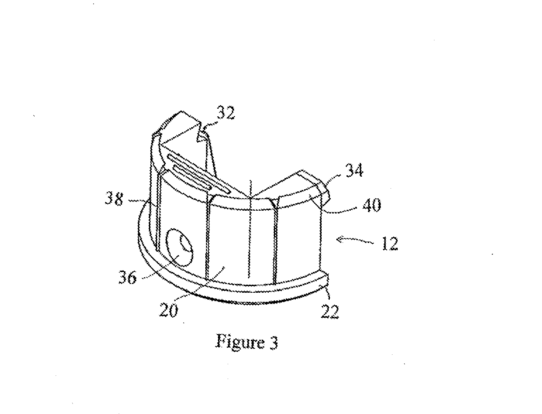

Referring initially to Figures 1 to 3, the fastener 10 includes two parts, 12, 14 (see Figure 1); Figure 1 shows both parts of the fastener but each part 12, 14 is identical and accordingly, only one part is shown in Figures 2 and 3.

Each part 12, 14 is made of plastic material, for example nylon, and can be made by injection moulding. Each part 12, 14 includes an opening 16 and a semi-circular periphery 18, which is composed of a cylindrical wall 20 and a flange 22. Within the opening 16 there are provided five teeth, two large teeth and three small teeth 24 (only one large and two small teeth are visible in Figure 2). On the side walls of the openings 16, there are provided a pair of tabs 26 whose function is to hold the fastener part on an element while the two parts are assembled around the element, as further described in detail below.

The two parts 12,14 are intended to abut each other at end faces 11,15. One end face of each part 12, 14 includes a projection 28 while the other end face includes a recess 30 (see Figure 2). The projection 28 on each part can be inserted into the corresponding recess 30 in the other part when the two parts are brought together, thereby joining the two parts together and preventing relative movement between the two parts in the axial direction, i.e. in a direction parallel to the axis of the opening 16 and parallel to the direction of the axis of the element. Above each projection 28, there is provided a cut-out 32 and above each recess 30, there is provided an overhang 34. The overhang 34 of each part 12, 14 engages in the cut-out 32 of the other part when the two parts are engaged together.

Referring now to Figure 3, which shows the back view of the part 12, including a side wall 20 and a flange 22, as described above. A through-hole 36 may be provided in the side wall 20 through which a screw can be passed to engage an element within the opening 16. The hole 36 is, as shown, counter-sunk. However, in view of the teeth 24, it is generally not necessary to use a screw, in order to secure the fastener to an element located within the opening 16. The side wall 20 includes a number of grooves 38 to provide flexibility to the side wall when it is being inserted into a hole (see below). It will be observed that the top of the side wall 20 is chamfered at 40 to assist in the insertion of the fastening into a hole.

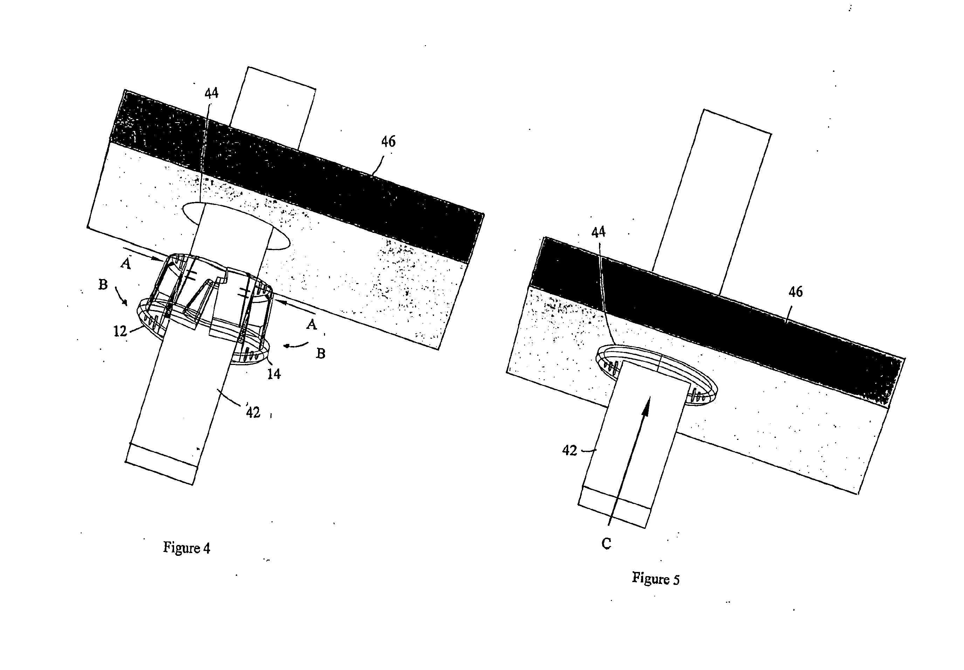

Turning now to Figures 4 and 5 which show the way in which the fastener is secured around a square section element 42 and then inserted into a hole 44 in an article shown schematically with the reference number 46. The diameter of the hole 44 is approximately the same as the diameter of the fastener wall 20 when the two parts 12, 14 are engaged together. Therefore, the insertion of the fastener into the hole 44 keeps the two parts 12, 14 in engagement with each other and with the element 42. The element 42 may be made of wood or other material that can receive the teeth 24, although harder material can be used, especially if there is a projection on the inside surface of the opening 16 that can project into a recess in the element 42 (or *vice versa);* alternatively, a screw can be inserted through the counter-sunk opening 36 to engage the fastener on the element 42.

In order to secure the fastener around the element 42, the overhang 34 on each part 12, 14 is engaged in the cut-out 32 of the other part, as shown by arrow A in Figure 4, i.e. the top of the fattener parts 12, 14 are engaged before the bottom part of the fastener. The tabs 26 can loosely engage the outside surface of the element 42 to keep the fastener on the element while it is being engaged around the element. The bases of the two fastener parts, 12, 14 are then brought together as shown by arrows B in Figure 5, which causes the projections 28 on each fastener part to engage in the corresponding recess 30 of the other part and also causes the teeth 24 to bite into the element 42. Once the fastener is engaged around the element 42, it is pushed into the hole 44 in the axial direction, as shown by arrow C of Figure 5. The fastener is inserted into the hole until the flange 22 engages the area around the hole and then the fastener can be pushed no further into the hole. Because of the tight fit of the fastener in the hole, the tight fit of the element within the fastener and because of the engagement of the teeth 24 in the element 42, the latter is held rigidly within the hole against forces pushing down on the article 46, i.e. forces pushing vertically downwards on the article 46. This means that the fixing is particularly suitable for use as legs supporting a surface above the element 42. Thus, the fastener can secure a leg in an article of furniture, including a shelf.

The hole 44 can be a through hole (as shown in Figures 4 and 5), in which case, the top of the hole can be closed by a cap (not shown). Alternatively, the hole 44 could be a blind hole.

## Claims

1. A fastener for securing an element of a first cross-section in an hole of a second, different cross-section, the fastener having an opening of the shape of the said first cross section that is able to accommodate said element and also having an outside perimeter of the shape of the second cross-section and so is able to fit into said hole, wherein:
the fastener comprises at least two separable parts that each defines part of the opening, and
the separable parts are capable of fitting together to define the said opening.

2. A fastener as claimed in claim 1, wherein the opening has an inner surface that includes at least one projection that is configured to project into such an element when said at least two parts are fitted together, thereby holding such an element and the fastener in a fixed position with respect to each other.

3. A fastener as claimed in claim 2, wherein the at least one projection comprises at least one tooth that can bite into the said element or wherein the at least one projection is capable of fitting into a corresponding recess in the element

4. A fastener as claimed in claim 1, wherein the opening has an inner surface that includes a recess capable of receiving a corresponding projection from the element, thereby holding such an element and the fastener in a fixed position with respect to each other.

5. A fastener as claimed in claim, wherein adjacent separable parts are connected together by a joint when they are fitted together.

6. A fastener as claimed in claim 5, wherein the joint includes a male projection on one part and a female recess on the adjacent part.

7. A fastener as claimed in any proceeding claim, wherein the opening in at least one of the separable parts has an inner surface that includes at least one tab that engages the element during assembly to keep that separable part in place on the element while the other part or parts are being fitted together around the element.

8. A fastener as claimed in any proceeding claim, which has two separable elements that are identical to each other.

9. A fastener as claimed in any proceeding claim, which includes at least one abutting projection, e.g. a flange, that limits the distance that the fastener can be advanced into the hole.

10. A fastener as claimed in any proceeding claim, wherein the perimeter is generally circular cylindrical or circular frusto conical and the opening is generally rectangular in shape, e.g. square.

11. A method of securing an element of a first cross-section in a hole of a second, different cross-section by means of a fastener, e.g. a fastener as claimed in any proceeding claim, wherein the fastener has an opening of the shape of the said first cross section and an outside perimeter of the shape of the second cross-section, wherein the fastener comprises at least two separable parts that each defines part of the opening, and wherein the separable parts when fitted together define the said opening, the method comprising:
fitting the at least two separable parts around the element so that the element is accommodated within the opening in the fastener and
securing the fastener and the element in said hole.

12. A method as claimed in claim 11, wherein the fastener is secured in the hole by friction.

13. A method as claimed in claim 11 or claim 12, wherein the hole is a through hole or a blind hole and optionally, when the hole is a through hole, the method includes capping off the end of the hole remote from the element.

14. A method as claimed in any of claims 11 to 13, wherein the element is an upright in a piece of furniture and the hole is formed in another part of the piece of furniture, e.g. a shelf, a shelf support, a display, a table, cupboard, kitchen or storage unit, a chair or a stool..

15. An article, e.g. a piece of furniture, including
- an element, e.g. an upright,
- a part having a hole of a different cross-section to that of the element and
- a fastener securing the element in the hole,
wherein the fastener comprises at least two separable parts that:
each defines part of an opening that accommodates said element and
together have an outside perimeter of the shape of the hole and
wherein the fastener is fitted into said hole to hold the fitting and the element in the hole.
